# DEMANDE DE BREVET EUROPEEN

(11) **EP 2 896 843 A1**
(43) Date de publication de la demande: **22.07.2015**
(21) Numéro de dépôt: 15151018.7
(22) Date de dépôt: 13.01.2015
(51) Int. Cl.: F16C 33/10, F16C 33/74, B01D 33/067, B01D 33/80, F16N 7/36, F16N 31/00

(54) **Dispositif de récupération de graisse de lubrification entre arbre et moyeu de tambour filtrant**

(30) Priorité: 21.01.2014 FR 1450463
(71) Demandeur: E. BEAUDREY & Cie., F-75018 Paris (FR)
(72) Inventeur: Jackson, Philip, Eugène, Douglas, 75007 Paris (FR); Carayon, Laurent, 92380 Garches (FR)
(74) Mandataire: Laget, Jean-Loup

(57) **Abrégé**

Le moyeu (2) comporte au moins une bague (7) de moyeu, l'arbre (1) porte au moins une bague (8) d'arrêt, la lubrification de chaque bague (7) de moyeu est assurée par apport de graisse par un canal (9).

La bague (7) de moyeu porte sur sa face radiale un anneau d'étanchéité (12), la bague (8) d'arrêt porte un anneau d'étanchéité (13), les anneaux d'étanchéité (12,13) délimitent avec l'arbre (1) un espace (21) de lubrification, relié par un canal (22) et une canalisation (23) à un bac de récupération de graisse usée.

## Description

L'invention concerne un dispositif de récupération de graisse de lubrification entre arbre et moyeu de tambour filtrant.

Un tambour filtrant est un tambour, tournant lentement autour de son axe horizontal, de forme générale cylindrique, dont la surface périphérique est constituée par un tamis calibré. Généralement, le tamis est traversé de l'extérieur vers l'intérieur par une eau brute qui est ainsi tamisée. Les détritus retenus à l'extérieur du tamis sont régulièrement enlevés par aspersion de l'intérieur vers l'extérieur et sont collectés dans un chéneau et évacués.

Ce tambour tourne sur un arbre fixe, dans lequel sont prévus des moyens de graissage. Autour de l'arbre fixe, un moyeu tournant porte des rayons de support du tamis.

Le moyeu est généralement équipé de bagues en bronze ou synthétiques, qui permettent la rotation du tambour filtrant avec des moyens d'entraînement relativement faibles par rapport à la masse du tambour filtrant. Entre l'arbre fixe et les bagues du moyeu, une lubrification doit être assurée par graissage, pour limiter l'usure réciproque des pièces mécaniques, et pour éviter l'intrusion de particules abrasives en suspension dans l'eau.

Selon l'état de la technique, au niveau de chaque bague du moyeu, débouche au moins une canalisation de graissage disposée à l'intérieur de l'arbre fixe et alimentée par une pompe fixe ou mobile. Une bague d'arrêt, solidaire de l'arbre fixe, limite le déplacement axial de la bague de moyeu et porte à l'extérieur un joint cylindrique de protection, limitant l'intrusion de particules abrasives, entre bague de moyeu et bague d'arrêt.

Ainsi, selon l'état de la technique, les pièces mécaniques en rotation réciproque sont protégées contre l'intrusion de particules abrasives par la graisse de lubrification.

Pour bien remplir sa fonction, la graisse est fournie en excès et l'excédent de graisse s'échappe dans l'eau tamisée au bord du joint cylindrique de protection. Il en résulte une pollution de l'eau tamisée, contraire aux règles de protection de l'environnement.

L'un des buts de l'invention est de proposer un dispositif de récupération de graisse de lubrification pour éviter une telle pollution.

Un autre but de l'invention est de proposer un dispositif de récupération de graisse de lubrification qui reste efficace même en cas d'usure des bagues de moyeu.

L'invention a pour objet un dispositif de récupération de graisse de lubrification entre arbre et moyeu de tambour filtrant, le moyeu comportant au moins une bague de moyeu, l'arbre portant une bague d'arrêt pour chaque bague de moyeu, la lubrification de chaque bague de moyeu étant assurée par apport de graisse au moyen d'un canal alimenté par une pompe, caractérisé en ce que :
- la bague de moyeu porte sur sa face radiale un anneau d'étanchéité,
- la bague d'arrêt porte un anneau d'étanchéité maintenu en appui sur l'anneau d'étanchéité de la bague de moyeu,
- les anneaux d'étanchéité délimitent avec l'arbre un espace de lubrification, et
- un deuxième canal est disposé au droit de l'espace de lubrification pour récupérer la graisse usée.

Avantageusement, l'anneau d'étanchéité de la bague d'arrêt est fixé sur une entretoise annulaire sollicitée par un ressort vers l'anneau d'étanchéité de la bague de moyeu.

De manière avantageuse, l'anneau d'étanchéité de la bague d'arrêt est fixé sur l'entretoise au moyen d'une vis à tige longue dont l'extrémité est logée dans l'alésage axial d'un bouchon vissé dans un taraudage de la bague d'arrêt.

Avantageusement, à chaque bouchon, un passage entre l'arbre et le taraudage correspondant de la bague d'arrêt, rejoint ledit espace de lubrification.

De manière avantageuse, le deuxième canal disposé au droit de l'espace de lubrification, est relié par une canalisation à un bac de récupération de graisse usée.

L'invention a encore pour objet un tambour filtrant caractérisé en ce qu'il comporte un dispositif de récupération de graisse de lubrification tel que décrit ci-dessus.

D'autres caractéristiques, détails et avantages ressortent de la description qui suit, faite en référence aux dessins annexés dans lesquels :
- la figure 1 est une vue en coupe axiale de la zone de liaison entre bague de moyeu et bague d'arrêt selon l'état de la technique ;
- la figure 2 est un schéma de principe d'un tambour filtrant équipé de dispositifs de récupération de graisse de lubrification entre arbre et moyeu, selon l'invention ;
- la figure 3 est une vue partielle en coupe axiale d'un dispositif de récupération de graisse de lubrification entre arbre et moyeu selon l'invention, en l'absence de graisse ;
- la figure 4 est une vue analogue à la figure 3, en présence de graisse.

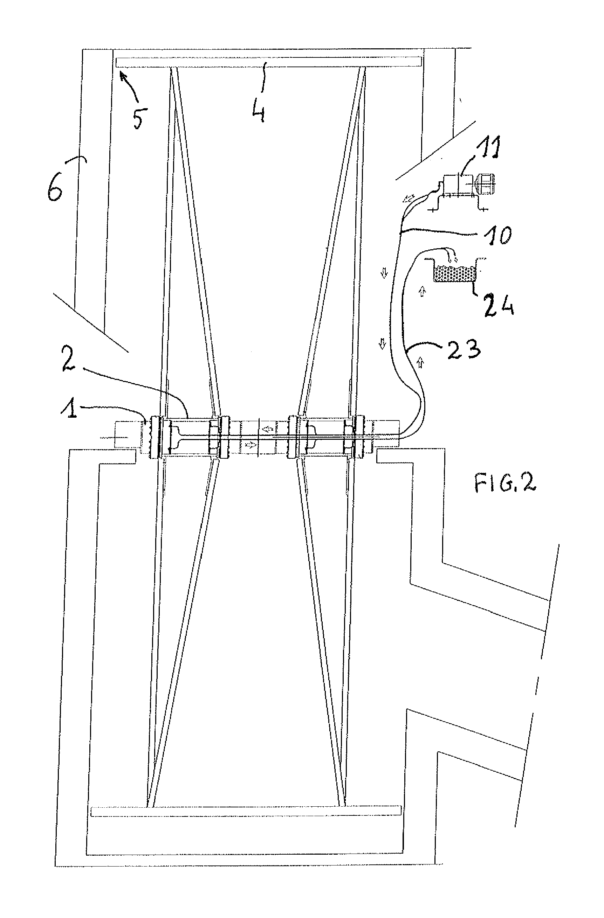

Un tambour filtrant se compose essentiellement (figure 2) d'un arbre 1 fixe, creux, sur lequel tourne un moyeu 2 portant des rayons 3. Au bout des rayons 3 est disposé un tamis cylindrique 4. Sur les bords du tamis 4 sont montées des étanchéités tournantes 5 s'appuyant sur les parois 6 encadrant le tambour filtrant.

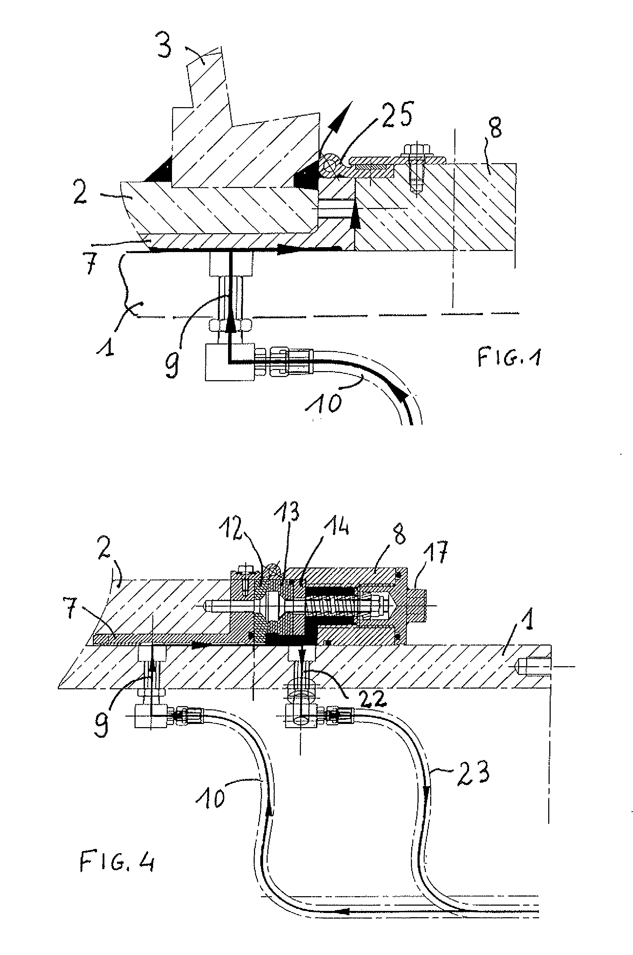

Selon l'état de la technique (figure 1) le moyeu 2 est équipé de bagues 7 de moyeu, en bronze ou synthétiques, pour faciliter la rotation du moyeu 2 sur l'arbre 1. Chaque bague 7 de moyeu est en appui, axialement, contre une bague 8 d'arrêt solidaire de l'arbre fixe 1.

Au niveau de chaque bague 7 de moyeu, l'arbre creux 1 est traversé par un canal radial alimenté en graisse par l'intermédiaire d'une canalisation 10, à partir d'une pompe 11.

La graisse sortant du canal 9 lubrifie la bague 7 de moyeu. Elle est ensuite entraînée vers la bague 8 d'arrêt et elle lubrifie la surface radiale d'appui de la bague 7 de moyeu contre la bague 8 d'arrêt. Enfin, elle s'écoule vers l'extérieur. Pour éviter que des particules abrasives pénètrent entre les deux bagues, 7 de moyeu et 8 d'arrêt, un joint 25 cylindrique de protection est disposé sur la bague 8 d'arrêt. Ce joint est efficace contre les particules extérieures, mais il laisse échapper la graisse qui pollue l'eau tamisée.

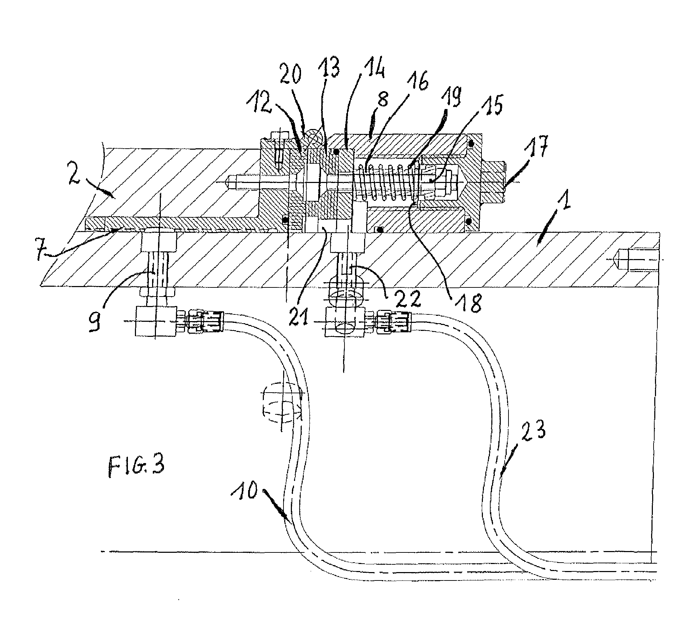

Selon l'invention (figure 3) la bague 7 de moyeu porte, sur sa face radiale, un anneau d'étanchéité 12. De son côté, la bague 8 d'arrêt porte un anneau d'étanchéité 13, destinée à être maintenue en appui sur l'anneau d'étanchéité 12 de la bague 7 de moyeu.

A cet effet, l'anneau d'étanchéité 13 est fixé sur une entretoise annulaire 14 au moyen d'une vis 15 à tige longue. La tige d'une vis 15 traverse, de l'autre côté de l'entretoise 14, une pièce 16 de guidage, cylindrique, dont une première extrémité est en appui sur la face de l'entretoise 14 opposée à l'anneau d'étanchéité 13, et dont une deuxième extrémité coulisse dans l'alésage axial d'un bouchon 17 vissé dans un taraudage de la bague 8 d'arrêt. L'extrémité de la tige de la vis 15 est logée dans l'alésage axial du bouchon 17.

Les bouchons 17 sont répartis régulièrement sur la bague 8 d'arrêt et leur nombre est, par exemple, de huit. Sur la face intérieure du bouchon 17, tournée vers l'entretoise 14, est disposée une rondelle 18. Entre la rondelle 18 et l'entretoise 14 est disposé un ressort 19 hélicoïdal chargé d'assurer l'appui de l'anneau d'étanchéité 13 de la bague 8 d'arrêt, contre l'anneau d'étanchéité 12 de la bague 7 de moyeu. Ainsi le ressort 19 sollicite en permanence l'entretoise 14 vers l'anneau d'étanchéité 12 de la bague (7) de moyeu. La pression du ressort 19 peut être réglée en faisant varier l'épaisseur de la rondelle 18.

Au droit de la face d'appui réciproque des deux anneaux d'étanchéité 12 et 13, sur la périphérie de cette face d'appui réciproque, est disposé un joint 20 de protection, cylindrique, fixé dans l'exemple décrit, sur la bague 7 de moyeu.

Les anneaux d'étanchéité 12, 13 et l'entretoise 14 ne sont pas en appui sur l'arbre 1, et délimitent avec l'arbre 1 un espace annulaire 21 de lubrification.

De plus, à chaque bouchon 17, un passage est ménagé entre l'arbre 1 et le taraudage correspondant de la bague 8 d'arrêt, qui rejoint l'espace annulaire 21 situé entre l'arbre 1 d'une part, les anneaux d'étanchéité 12, 13 et l'entretoise 14 d'autre part.

De ce fait, la zone de lubrification de la bague 7 de moyeu, qui est contre l'arbre 1, communique avec l'espace annulaire 21 et les taraudages de la bague 8 d'arrêt contenant les pièces 16 de guidage et les ressorts 19, qui sont tous remplis de la graisse apportée par la canalisation 10 et le canal 9 (figure 4).

Un deuxième canal 22 radial, traversant l'arbre 1 est disposé au droit de l'espace 21 pour récupérer la graisse usée. Ce canal 22 radial est relié par une canalisation 23 à un bac 24 de récupération de la graisse usée (figure 2).

Ainsi, la graisse de lubrification apportée à la bague 7 de moyeu ne pollue pas l'eau tamisée et elle est récupérée dans le bac 24 pour retraitement.

Un autre avantage du dispositif de récupération selon l'invention est lié à la présence des ressorts 19.

En effet, soit en cas d'usure des anneaux d'étanchéité 12, 13, soit en cas de déplacement axial de la bague 7 de moyeu, les ressorts 19 assurent un déplacement axial de l'entretoise 14 et de l'anneau d'étanchéité 13, ce qui maintient l'appui réciproque des anneaux d'étanchéité 12 et 13. Par ailleurs, en cas d'usure de la surface cylindrique d'appui de la bague 7 de moyeu contre l'arbre 1, l'ensemble du moyeu 2 se décale radialement par rapport à l'arbre 1.

L'espace 21 n'est plus alors rigoureusement constant tout autour de l'arbre 1. Cependant, la graisse occupe toujours tout l'espace disponible et elle est récupérée de la même manière.

Ainsi le dispositif de récupération reste efficace en cas de déplacement radial ou axial du moyeu.

Dans un tambour filtrant, il est usuel que le moyeu comporte plusieurs bagues de moyeu et autant de bagues d'arrêt fixées sur l'arbre.

Un dispositif de récupération de graisse doit être installé pour chaque point de graissage matérialisé par un canal 9 radial, et être relié au bac de récupération de la graisse usée par une canalisation 23 qui peut être commune à plusieurs points de retour.

Dans l'exemple de réalisation décrit, l'arbre 1 est fixe et le moyeu 2 est mobile. Dans un autre exemple de réalisation, l'arbre 1 est mobile et des paliers d'extrémité d'arbre sont fixes. Le dispositif de récupération de graisse est alors installé dans le palier et il reste efficace en cas de déplacement axial ou radial de l'arbre en raison de l'usure des bagues. Le sens de circulation de l'eau peut aussi être de l'intérieur vers l'extérieur.

## Revendications

1. Dispositif de récupération de graisse de lubrification entre arbre (1) et moyeu (2) de tambour filtrant, le moyeu (2) comportant au moins une bague (7) de moyeu, l'arbre (1) portant une bague (8) d'arrêt pour chaque bague (7) de moyeu, la lubrification de chaque bague (7) de moyeu étant assurée par apport de graisse au moyen d'un canal (9) alimenté par une pompe (11), **caractérisé en ce que** :
- la bague (7) de moyeu porte sur sa face radiale un anneau d'étanchéité (12),
- la bague (8) d'arrêt porte un anneau d'étanchéité (13) maintenu en appui sur l'anneau d'étanchéité (12) de la bague (7) de moyeu,
- les anneaux d'étanchéité (12,13) délimitent avec l'arbre (1) un espace (21) de lubrification, et
- un deuxième canal (22) est disposé au droit de l'espace (21) de lubrification pour récupérer la graisse usée.

2. Dispositif de récupération selon la revendication 1, **caractérisé en ce que** :
- l'anneau d'étanchéité (13) de la bague (8) d'arrêt est fixé sur une entretoise annulaire (14) sollicitée par un ressort (19) vers l'anneau d'étanchéité (12) de la bague (7) de moyeu.

3. Dispositif de récupération selon la revendication 2, **caractérisé en ce que** :
- l'anneau d'étanchéité (13) de la bague (8) d'arrêt est fixé sur l'entretoise (14) au moyen d'une vis (15) à tige longue dont l'extrémité est logée dans l'alésage axial d'un bouchon (17) vissé dans un taraudage de la bague (8) d'arrêt.

4. Dispositif de récupération selon la revendication 3, **caractérisé en ce que** :
- à chaque bouchon (17), un passage entre l'arbre (1) et le taraudage correspondant de la bague (8) d'arrêt, rejoint ledit espace (21) de lubrification.

5. Dispositif de récupération selon la revendication 1, **caractérisé en ce que** :
- le deuxième canal (22) disposé au droit de l'espace (21) de lubrification, est relié par une canalisation (23) à un bac de récupération (24) de graisse usée.

6. Tambour filtrant **caractérisé en ce qu'**il comporte un dispositif de récupération de graisse de lubrification selon l'une des revendications 1 à 5.
